**Europäisches Patentamt**

**European Patent Office**

**Office européen des brevets**

(19)

(11) Numéro de publication: **0 074 302**
**A1**

(12) # DEMANDE DE BREVET EUROPEEN

(21) Numéro de dépôt: **82401564.8**

(22) Date de dépôt: **23.08.82**

(51) Int. Cl.³: **H 01 M 4/88**

(30) Priorité: **07.09.81 FR 8117054**

(43) Date de publication de la demande:
**16.03.83 Bulletin 83/11**

(84) Etats contractants désignés:
**AT BE CH DE GB IT LI NL SE**

(71) Demandeur: **INSTITUT FRANCAIS DU PETROLE**
**4, Avenue de Bois-Préau**
**F-92502 Rueil-Malmaison(FR)**

(72) Inventeur: **Grehier, Alain**
**26, rue Mousset Robert**
**F-75012 Paris(FR)**

(72) Inventeur: **Breelle, Yves**
**12, Allée du Tapis Vert Domaine de Grandchamp**
**F-78230 Le Pecq(FR)**

(54) **Procédé de fabrication d'une membrane poreuse hydrofuge et membranes obtenues par ce procédé.**

(57) On soumet une feuille de métal déployé, ou une grille, à un traitement de surface, puis à un nickelage et à un traitement de recuit. On dépose ensuite un agent d'accrochage sur l'une des faces (2) de la feuille de métal ou grille et, après séchage de cet agent, on plaque sur cette face (2) une couche poreuse (4) de téflon préalablement déposée sur une feuille d'aluminium (5) par pulvérisation suivie d'un traitement de frittage. On effectue ensuite un traitement thermique d'accrochage de la couche poreuse (4).

Application aux piles à combustible, aux échangeurs liquides-gaz, ainsi qu'aux humidificateurs d'air.

Pl. unique

FIG.1

EP 0 074 302 A1

- 1 -

PROCEDE DE FABRICATION D'UNE MEMBRANE POREUSE HYDROFUGE ET MEMBRANES
OBTENUES PAR CE PROCEDE.

La présente invention concerne un procédé de réalisation d'une membrane
poreuse hydrofuge et les membranes obtenues par ce procédé.

De telles membranes sont, par exemple, utilisables dans des échangeurs
liquides-gaz, notamment ceux qui utilisent la chaleur latente de vaporisation du liquide utilisé pour évacuer ou capter les calories. Le
liquide circule entre deux membranes poreuses qui permettent de développer ainsi sa surface de contact avec le gaz.

Un autre exemple d'application est celui des humidificateurs d'air
utilisant le même principe de transfert de l'eau au gaz.

Une autre application de l'invention concerne l'utilisation de ces
membranes poreuses hydrofuges pour la réalisation d'électrodes de piles
à combustible. Cette dernière application sera plus spécialement envisagée dans ce qui suit, étant bien entendu qu'elle ne doit nullement
être considérée comme limitative.

Les électrodes des piles à combustible sont généralement constituées
d'un support métallique sur lequel est déposé un catalyseur approprié
et qui est recouvert d'une couche poreuse hydrofuge séparant l'électrolyte des réactifs gazeux alimentant la pile.

Ce support métallique peut être constitué en nickel fritté, mais ce matériau est cher et on a préconisé l'utilisation de grilles métalliques, d'un coût nettement moins élevé (de l'ordre de 10 fois moindre) pour constituer ce support métallique sur lequel peuvent s'accrocher le dépôt catalytique et la couche hydrofuge.

Il est encore moins onéreux de constituer ce support en métal déployé dont la fabrication présente, par rapport à celle d'une grille, l'avantage de s'effectuer sans perte de matière.

L'invention résoud le problème ainsi posé en fournissant un procédé de fabrication d'une membrane poreuse hydrofuge, caractérisé par la combinaison des étapes successives suivantes :

a) on soumet une feuille de métal déployé ou une grille en acier doux à un traitement de surface comportant un dégraissage et un sablage et on effectue le nickelage de la feuille de métal déployé ou grille,

b) on effectue un traitement thermique de recuit du produit ainsi obtenu,

c) on dépose sur une première face de la feuille de métal ou grille une solution d'un agent d'accrochage, ou primaire,

d) après séchage de l'agent d'accrochage, on applique sur ladite première face une couche poreuse hydrofuge, réalisée séparément par pulvérisation de polytétrafluoréthylène sur une feuille d'aluminium suivie d'un traitement de frittage du polytétrafluoréthylène, on décolle la feuille d'aluminium et

e) on réalise l'accrochage du polytétrafluoréthylène de ladite couche poreuse au métal déployé ou à la grille par placage de ladite couche poreuse et traitement thermique d'accrochage.

L'invention est illustrée par les figures annexées où :

- la figure 1 représente schématiquement les éléments constitutifs d'une membrane poreuse selon l'invention,

- la figure 2 illustre la première opération de placage de la couche poreuse hydrofuge, et

- la figure 3 montre la seconde opération de placage, après décollage de la feuille d'aluminium.

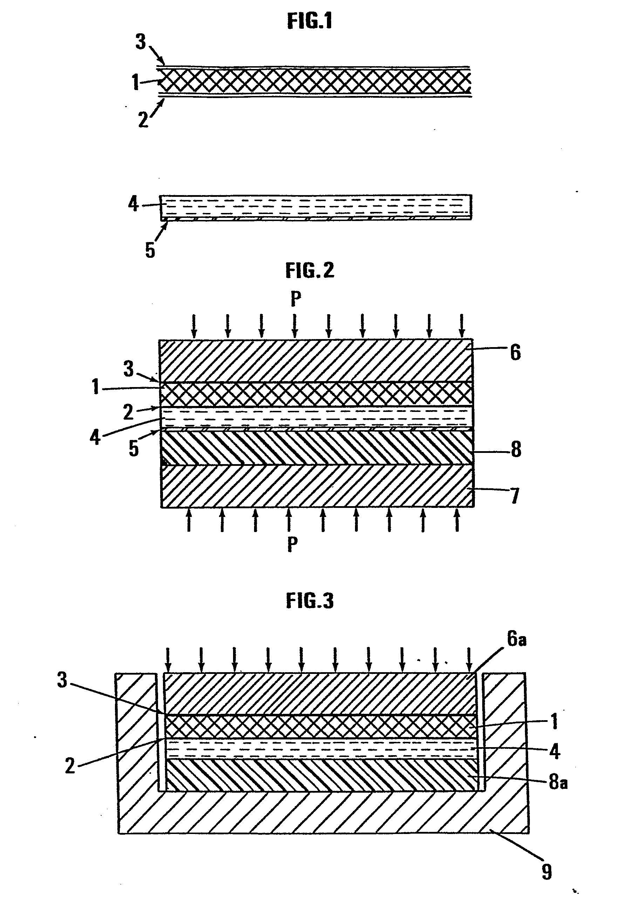

Sur la figure 1, la référence 1 désigne une feuille de métal déployé en acier doux (d'une épaisseur de l'ordre de 20/100 mm) préalablement soumise à un traitement de surface comportant un dégraissage (par exemple à la vapeur de trichloréthylène) et un sablage. On effectue ensuite un traitement de nickelage des deux faces 2 et 3 de cette feuille de métal, puis un traitement thermique de recuit dans des conditions telles que : température de 650°C maintenue pendant 2 heures, dans une atmosphère constituée d'un mélange d'hydrogène et azote par parties égales, puis refroidissement lent.

Ce traitement de recuit est nécessité par le fait que le métal déployé est initialement à l'état écroui, et il présente, en outre, l'avantage de faire légèrement diffuser le nickel vers l'intérieur du métal déployé.

Sur une première face 2 de la feuille de métal déployé nickelé, on dépose une solution d'un agent d'accrochage ou primaire, capable de créer dans le métal, par attaque chimique, des cavités d'accrochage de la couche 4 de poudre de polytétrafluoréthylène frittée qui sera appliquée dans l'étape suivante contre cette face 2.

Cet agent d'accrochage ("primer") pourra être une solution de chromate d'un type connu appliquée, par exemple, par pulvérisation sur la face 2.

Après un temps de réaction suffisant, la face 2 sera séchée, par exemple à une température de l'ordre de 250°C.

L'étape suivante du procédé consiste en l'application d'une couche 4 de polytétrafluoréthylène (ou téflon) poreux contre la face 2 dont l'épaisseur sera par exemple de l'ordre de 1/10 de millimètre.

Cette couche 4 est réalisée séparément par pulvérisation de polytétrafluoréthylène (pulvérisation électrostatique de préférence) sur une feuille d'aluminium 5, cette pulvérisation étant suivie d'un traitement de frittage des particules de polytétrafluoréthylène, ce traitement de frittage pouvant être effectué à une température de l'ordre de 350°C.

On réalise une première opération de placage de la couche 4 contre la face 2 de la feuille 1 de métal déployé, la feuille d'aluminium 5 étant placée du côté extérieur comme le montre la figure 1, ce placage étant effectué par exemple à une température de l'ordre de 120°C et en appliquant une pression P de l'ordre de 5 bars, par rapprochement des plateaux 6 et 7 d'une presse, avec interposition d'une couche 8 d'élastomère tel que l'adiprène (dureté 70 shore) s'appliquant contre la couche 5 d'aluminium (Figure 2).

Après cette première opération de placage, on décolle la feuille d'aluminium et on effectue ensuite une seconde opération de placage en pressant l'ensemble 1-4 au moyen d'un plateau 6a contre le fond d'un moule, avec interposition d'une couche 8a d'adiprène entre la couche 4 et le fond 9 du moule, cette seconde opération de placage pouvant être effectuée à la température ambiante, sous une pression de l'ordre de 20 bars.

On fait suivre cette seconde opération de placage d'un traitement thermique d'accrochage du téflon au métal déployé, par passage à l'étuve à une température voisine de 380°C pendant 1 heure, ce qui réalise un frittage des particules de polytétrafluoréthylène et produit l'accrochage recherché.

Le produit fini constitue une membrane poreuse hydrofuge susceptible d'avoir de nombreuses applications.

- 5 -

Comme indiqué plus haut, l'une de ces applications concerne la réalisation d'électrodes pour piles à combustible (électrodes à air et électrodes à hydrogène).

Les éléments actifs du catalyseur et leur support (charbon actif, par exemple) sont mis en suspension dans l'eau ou l'alcool. Cette suspension est pulvérisée sur la seconde face 3 (Figure 1), opposée à la face 2, de la membrane poreuse hydrofuge précédemment réalisée, cette membrane ayant été préalablement chauffée en l'appliquant sur une plaque chauffante à une température appropriée, comprise entre 90° et 150°.

Après un éventuel traitement d'oxydo-réduction par un gaz approprié, l'électrode est séchée à l'étuve et sa face catalytique 3 éventuellement recouverte d'une feuille protectrice, par exemple de papier, en attendant son utilisation dans une pile à combustible.

Il sera, bien entendu, possible d'appliquer la suspension contenant les éléments catalytiques autrement que par pulvérisation sur la face 3 de la membrane poreuse, par exemple par enduction de cette face, en utilisant une technique sérigraphique pour réaliser le dépôt catalytique.

REVENDICATIONS

1. - Procédé de fabrication d'une membrane poreuse hydrofuge, caractérisé par la combinaison des étapes successives suivantes :

   a) on soumet une feuille de métal déployé ou une grille d'acier doux à un traitement de surface comportant un dégraissage et un sablage et on effectue le nickelage de la feuille de métal déployé ou de la grille,

   b) on effectue un traitement thermique de recuit du produit ainsi obtenu,

   c) on dépose sur une première face de la feuille de métal ou grille une solution d'un agent d'accrochage, ou primaire,

   d) après séchage de l'agent d'accrochage, on applique sur ladite première face une couche poreuse hydrofuge, réalisée séparément par pulvérisation de polytétrafluoréthylène sur une feuille d'aluminium suivie d'un traitement de frittage de polytétrafluoréthylène, on décolle la feuille d'aluminium, et

   e) on réalise l'accrochage du polytétrafluoréthylène de ladite couche poreuse dans le métal déployé ou grille par placage de ladite couche poreuse et traitement thermique d'accrochage.

2. - Procédé selon la revendication 1, appliquée à la fabrication d'électrodes pour pile à combustible, caractérisé en ce qu'on effectue le dépôt d'une couche catalytique sur la seconde face de la feuille ou grille constitutive de la membrane poreuse obtenue à l'issue de l'étape e).

3. - Membrane poreuse hydrofuge obtenue suivant le procédé de la revendication 1, caractérisée en ce qu'elle comporte une feuille de métal déployé ou une grille en acier doux dont les faces sont nickelées, une première de ces faces étant recouverte d'une couche de poudre de polytétrafluoréthylène agglomérée par frittage, cette couche étant accrochée à ladite première face par pénétration dans le métal déployé ou grille.

4. - Electrode pour pile à combustible obtenue suivant le procédé de la revendication 2, caractérisée en ce qu'elle comporte une feuille de métal déployé ou une grille en acier doux dont les faces sont nickelées, une première de ces faces étant recouverte d'une couche de poudre de polytétrafluoréthylène agglomérée par frittage, cette couche étant accrochée à ladite première face par pénétration dans le métal déployé, la seconde face de ladite feuille de métal déployé ou grille étant recouverte de catalyseur.

0074302

PL_unique

**FIG.1**

**FIG.2**

**FIG.3**

Office européen
des brevets

**RAPPORT DE RECHERCHE EUROPEENNE**

0074302
Numéro de la demande

EP 82 40 1564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | H 01 M 4/88 |
| A | FR-A-1 604 645 (INSTITUT FRANCAIS DU PETROLE, DES CARBURANTS ET LUBRIFIANTS) *Revendications 1-13* | 1-4 | |
| A | GB-A-1 160 588 (MATSUSHITA ELECTRIC INDUSTRIEL CO., LTD.) *Revendications 1-8* | 1-4 | |
| A | DE-A-2 111 095 (BUNDESREPUBLIK DEUTSCHLAND, BMV) *Revendications 1,2* | 1-4 | |
| | ----- | | |

**DOMAINES TECHNIQUES RECHERCHES (Int. Cl. 3)**

H 01 M

Le présent rapport de recherche a été établi pour toutes les revendications

| Lieu de la recherche | Date d'achèvement de la recherche | Examinateur |
|---|---|---|
| LA HAYE | 08-12-1982 | STANGE R.L.H |